# EUROPEAN PATENT APPLICATION

(11) **EP 1 520 481 A1**
(43) Date of publication of application: **06.04.2005**
(21) Application number: 04077753.4
(22) Date of filing: 04.10.2004
(51) Int. Cl.: A23C 19/08, A01J 27/04, A23C 19/09

(54) **Method for producing a shaped cheese product, the cheese product obtained and an apparatus for continuously performing the method**

(30) Priority: 02.10.2003 NL 1024436
(71) Applicant: Friesland Brands B.V., 7943 PE Meppel (NL)
(72) Inventor: Verhoeven, Vincent, 9716 ET Groningen (NL); Jongsma, Tjeerd, 6721 DZ Bennekom (NL); Fransen, Rudi Hendrik, 9001 NM Grou (NL)
(74) Representative: Winckels, Johannes Hubertus F.

(57) **Abstract**

A method for preparing a shaped cheese or a shaped cheese product, wherein cheese, optionally in combination with curd and/or other products of dairy origin, as well as with other, non protein containing dairy additions and non dairy based additive products is treated and shaped. Further, the invention relates to a cheese or cheese product shaped according to that method. Finally, the invention concerns an extrusion apparatus useful for the method.

## Description

The invention relates to a method for producing a shaped cheese or a shaped cheese product, and preferably to a continuous method for processing and shaping cheese or a cheese product by extrusion. Furthermore, the invention concerns the shaped cheese obtainable with this method, or the thus obtainable shaped cheese product. In addition, the invention concerns an apparatus arranged for continuously performing the method.

Cheeses and cheese products have been manufactured for centuries, those cheeses and cheese products typically having a characteristic shape. In this connection, the range of shapes is limited.

A classic way of making a cheese and in particular a cheese of the hard or semi-hard type begins with the pressing of curd in a mold. In nearly all cases, the shaped curd needs time to ripen into cheese.

Although it is possible, in principle, to shape cheese or cheese products differently, and in particular into small portions, by using different molds, and thus to prepare, for instance, cushions, slices or cubes of cheese, in practice, this requires supplemental actions and processing operations, for instance in the ripening process. Moreover, this often entails (unduly) high production costs.

Cheeses or cheese products are sometimes produced in a particular shape by cutting up or otherwise mechanically shaping the ripened cheese, but here too, the possibilities are limited, certainly when economic business aspects are taken into account. The reason is that in particular when three-dimensional shapes are contemplated, cutting losses occur, and the shaping equipment requires high investments.

Cheese products with a filling therein cannot be made with the classic cheese-making methods, nor is there much room for or are there any possibilities of admixing additives into the cheese. Typically, the additives will lose their added value during ripening. When additives are to be added to the cheese milk at all, a part of the (taste) components extracted from those additives will be separated along with the whey to be separated, as a result of which the whey will be processable only to a limited extent.

On the other hand, it is known to produce filled cheese products from curd by means of co-extrusion. For this purpose, reference is made, for instance, to United States Patent 5,194,283. More particularly, the curd is co-extruded together with another food without being subjected to heating. Different shapes can be obtained. When a cheese product of the semi-hard type is contemplated, the shaped product is vacuum-wrapped in a plastic film and subjected to a film ripening. This ripening step, which is necessary to give taste and texture to the cheese, limits the possibilities of the type of filling. For instance, no sugar can be allowed in the filling, because sugars upon fermentation by the cheese cultures can give rise to gas formation or other unwanted product formation. Moreover, such a specific ripening procedure increases the cost price of the product considerably. The shelf life of the product according to US-A-5,194,283 is short because the product has not been pasteurized, and cannot be subjected to any other preservative heating step either. Typically, the product and in particular the filling will deteriorate in quality due to degradation of a chemical and/or microbial nature.

Another type of method of obtaining a filled cheese product is described in European patent application 0 713 649. A process is described for making a filled unripened mozzarella ball by injecting a filling paste into a ball-shaped mozzarella cheese. With this process, in fact only ball-shaped products can be made. Admixing additives into the cheese matrix is not possible. Moreover, the choice of filling is limited in that the mozzarella is not pasteurized and the filling material should be injectable and hence paste-like, or must be in some other viscous form.

Accordingly, although some shaped natural cheese products are described in the prior art, the quantitatively most available cheese products having a specific shape, with or without additions and a good shelf-life, are prepared from process cheese. This preparation, though, necessitates adaptations to the process-cheese production process. Normally, this process involves cheese in liquid form being filled warm, after which the cheese in a package undergoes a passage through a cooling path and thereby sets.

In United States Patent 6,455,092, it is described that the process cheese can be given a specific shape by the use of a shaped nozzle or by filling the molten cheese composition into a mold. In this patent specification, it is further described that nuts and fruits can be admixed into the cheese melt.

Another method of giving process cheese a shape is described in the European patent application 0 813 818, in which process cheese is pumped into a moisture-permeable envelope which is to be removed subsequently.

Filled cheese products can also be made on the basis of process cheese. This is for instance described in the international patent application 99/59420. The cheese melt and the liquid filling in hot, liquid form are introduced via concentric filling conduits into a mold, followed by cooling. Filling is done such that the process cheese forms an outer layer completely enclosing the filling.

Cheese products according to the methods utilizing process cheese as discussed in the foregoing paragraphs, however, have a taste, as is well known, that is inferior to that of natural cheese. This is caused in particular by the intensive heat treatment which the cheese starting product is to undergo and the addition of melting salts to the product. Further, besides and because of the heat treatment and the addition of the melting salts, the conformation of the casein proteins changes irreversibly, which results in a different texture with respect to natural cheese. In addition, the choice of additives for process cheese is limited due to the heat treatment the product undergoes.

The present invention contemplates the provision of cheeses and cheese products which - in contrast to the above-described products - possess the following advantageous properties. The products contemplated should possess a long storage stability, at least meeting the usual storage term applying to cheese and cheese products, and meet the commercially required sell-by term. Furthermore, there is a need for products having the taste and texture of natural cheese. It should be possible to choose the shape of the cheese freely, at least the cheese and the cheese product should be producible in many shapes. Finally, it is required that optionally, but rather: preferably, fillings and/or additives can be simply added.

The present invention makes it possible to prepare such products.

To that end, the invention relates to a method for preparing, and preferably continuously producing, a shaped cheese or a shaped cheese product, wherein cheese, optionally in combination with curd and/or other products of dairy origin, as well as with other, non protein containing dairy additions and non-dairy additive products, is subjected to a heating step/pasteurization step, under mixing conditions, whereafter the product thereby formed is subjected to a cooling step, in which cooling step any fat having separated during the heating or pasteurization step is redispersed and the product is textured, which textured product is subsequently subjected to a shaping step via a nozzle. Optionally, in the nozzle, some post-cooling can be effected.

Particularly in view of the consideration that the taste and texture of a natural cheese are to be obtained, at least are to be approximated, the presence of cheese already finished is relevant. The starting product can comprise 100% of cheese. It is also possible, however, to obtain good products contemplated according to the invention by starting from cheese and adding to it other protein-containing dairy additions, such as curd and whey protein products, as well as other, non protein containing dairy additions and non-dairy based additive products. Very good results are achieved when the starting material comprises at least 60 wt.% and preferably at least 70 wt.% of cheese. On the other hand, the dry matter content should always be at least 30%, preferably at least 35% and most preferably at least 40%. Maximum dry matter contents are dictated by the processing conditions, in particular the heating steps, and are less critical than the minimum dry matter contents. Suitable upper limits are 75% and preferably 65%.

The presence of at least 40% and preferably at least 50% of cheese of the hard or semi-hard type gives good textural and taste properties. In particular, good results are achieved with at least 40% cheese of the Gouda or Edam type.

Besides cheese, as stated, another dairy-based protein source may be present. In particular, whey protein compositions, such as whey protein concentrates and isolates; casein and caseinate products; and curds; as well as ultrafiltration (UF) concentrates give very good properties when these are combined with a finished, that is, a ripened, cheese and in particular with such a cheese of the hard or semi-hard type.

Other dairy-derived products may also be present, and in particular cream, butterfat, butter oil and milk fat; as well as UF permeate powder, milk minerals, lactose and milk powder.

As stated, the dry matter content in the starting product for the method according to the invention should be minimally 30 wt.%, based on the total weight of the starting product.

Examples of other ingredients are thickeners, gelling agents, starches which may be present up to about 3%; antioxidants, vitamins, minerals, emulsifiers which may be present up to about 2%; herbs, colorings, aroma agents which may be present up to 3%; pulverized dried fruit, pulverized meat products which may be present up to about 5%. Further, it is often advantageous for obtaining a desired texture when water is added in amounts of up to about 15%, preferably up to about 10%, and more preferably up to approximately 5%.

By treating the starting product according to the method of the invention, and in particular by keeping the fats present in the emulsified condition, or bringing them back to such condition, via mixing in the cooling step, a product is obtained having a texture which at least resembles that of natural cheese. Also, the taste that is associated with that of natural cheese is thus obtained.

Here, "texturing" means: applying a structure which can be perceived sensorially. The "texture" is then the sensory sensation of the structure. "Structure" is here defined as the spatial build-up of the product, on a macroscopic, mesoscopic as well as microscopic level.

A heating or pasteurization step under mixing conditions is understood to mean that the starting product is mixed or kneaded and heated such that a product having a uniform temperature is obtained. That is, a product is obtained in which the temperatures measured at random points in the mass differ from each other by not more than some 15°C and preferably by less than 5°C.

Although this kneading step can be performed batchwise in, for instance, a heated mixing vessel with an intensive mixing by using, for instance, a high-speed mixing apparatus, this step is preferably performed in an extrusion apparatus with two co-rotating screws, which extrusion apparatus is heated via the wall, while the screws are provided with elements which promote a mixing action in radial direction. All this will be elaborated in detail hereinbelow.

A sufficient heating or pasteurization is obtained by holding the product homogeneously at at least 50°C for at least 25 seconds; holding the product homogeneously at at least 55°C or 60°C for at least 23 seconds; holding the product homogeneously at at least 65°C for at least 20 seconds; or maintaining the product at at least 70°C-75°C for at least 17 seconds. Preferably, however, in each case, heating is done for a longer time, for instance 5 seconds longer at the specified temperatures. Incidentally, after this description, it is within reach of the skilled person to set suitable heating or pasteurization conditions depending on the equipment to be used and tailored to the starting material to be processed therein. In addition, it is to be taken into account that above a starting material-dependent combination of temperature and time, the quality of the end product will diminish.

Pasteurization is here defined as a decrease of the general aerobic mesophilic germ count, expressed in germ-forming units per gram with a factor of at least 100-1,000. In a ripened cheese, the germ count is typically about 10⁸-10⁹. For use in the method according to the invention, it is necessary to reduce this to a value of at most approximately 10⁶. Reduction or prevention of growth of microorganisms can also be obtained, apart from the above-described heating step preferably between 50 and 70°C, by dosing growth-inhibiting agents to the starting material. Suitable are, for instance, nisin, potassium sorbate, benzoate and sorbic acid. It is to be noted here that, evidently, the higher the heating temperature, the sooner preservative and/or fungicidal agents or steps are required.

The pasteurized product obtained after the intensive mixing step, such as an intensive kneading step, can, with or without further processing, be supplied to the essential cooling step. This cooling step comprises lowering the temperature to a temperature between 0 and 40°C, but preferably between 5 and 30°C, and most preferably between 15 and 30°C. By performing the cooling step while kneading, at least while applying shearing forces, any fat which has been separated or has separated in this step is redispersed again, so that a homogeneous product remains which is textured. The cooling step can be carried out in a cooled kneading vessel, the kneading being such that the product is cooled in a balanced manner. Incidentally, the cooling step is preferably carried out in an extrusion apparatus.

The last essential step is the shaping of a cheese or cheese product utilizing a nozzle.

The cheese or the cheese product can be obtained in various structures and shapes. The product comprises cheese with the texture and the taste of a natural cheese. Moreover, the shaped products can be provided with a filling, and in a simple and homogeneous manner a variety of types of additives and processing aids can be added to the cheese mass.

Since such a product - as far as known - has not been described in the prior art yet, the invention concerns in a second aspect a shaped cheese or a shaped cheese product obtainable according to the method of the invention.

Preferably, the intensive kneading and the cooling step of the method according to the invention are both carried out in an extrusion apparatus, preferably even in one and the same extrusion apparatus.

To that end, the invention also concerns an extrusion apparatus, or extruder, arranged to be used for the method according to the invention, comprising co-rotating twin screws, which extrusion apparatus comprises a supply for at least cheese optionally in combination with curds and/or other products of dairy origin; which supply communicates with a pasteurization zone, comprising heating elements located in or on the extruder wall and elements on the twin screw arranged to give a radial mixing; downstream of the pasteurization zone at least one cooling zone, comprising cooling elements located in or on the extruder wall; and a nozzle for shaping the cheese or the cheese product.

Incidentally, the use of a (cooking) extruder in the preparation of food products is generally known. With the aid of cooking extruders, food products can be mixed, heated and shaped. The known uses comprise more in detail the heating and mixing of the raw materials in the extruder. Next, the product upon leaving the extruder obtains a shape in the nozzle head and usually the product undergoes an expansion whereby it loses a portion of the moisture through evaporation. Partly as a result of this, the resultant product has a relatively low moisture content, so that microbial aspects are of less importance. Moreover, the heat treatment which the product gets is often not of essential importance because it does not adversely affect, or actually promotes, the taste and the texture.

This is different for protein and fat containing products having a relatively high moisture content, such as the cheese-based products according to the invention. These products constitute a good nutrient medium for microbial growth and hence are susceptible to spoilage. For an acceptable storage life these products should undergo a heating or pasteurization step as defined above, or other intensive heating step in, for instance, an extruder. This involves a real risk of the product being subject to a heat load which is too high or not uniformly distributed over the product, which may entail taste and texture loss through degradation or conformational change of proteins, through degradation or conversion of flavors, while moreover egress of fat may occur.

To illustrate this, reference is made to the French patent application 2,794,936, disclosing a method in which in an extruder a cheese is prepared from curd and through addition of *inter alia* brine and *Penicillium* fungus. The curd is given a mild temperature treatment (<60°C) in the extruder because after packing sufficient microbial activity should be present to allow the curd to ripen. Pasteurization or other germicidal step is therefore not to be done. At the end of the extruder, the extruded curd, hot and fluid, is filled into a cheese mold. The thus shaped curd should subsequently undergo a ripening step. Any possibility of texturing, giving a particular shape to the product, or filling the product, is lacking.

Similarly, in the method described in FR-A-2,715,271, cheeses which do not meet the specifications, or pieces of cheese left after cutting, which products are unsaleable per se, are processed in an extruder, whereby the cheese "waste products" are molten in a controlled manner at a temperature of 70-80°C in an extruder. Subsequently, the cheese, while fluid, is filled into cheese molds. Again, there is no possibility of texturing, giving a particular shape to the product or introducing a filling into the product.

Furthermore, reference is made to the European patent application 0 727 138, disclosing a method in which cheese or cheese-like products are produced in an extruder from curd and/or the retentate of a milk ultrafiltration. Various additives can be added to control the product properties. The product is processed in the extruder only at temperatures well above room temperature, and in this case even up to 120°C. Only after leaving the extrusion apparatus is the plastic product subjected to a cooling step by means of a cooled nozzle, to enable the product to be textured and to be shaped.

The present inventors have found, however, that in this method a redistribution of the separated fat occurs hardly if at all at the high extrusion temperatures and is definitely not controllable in the cooled nozzle described. This is true all the more when a high percentage of cheese is used as starting material. The mixing and shearing to that end are too slight in the cooled nozzle. Moreover, it has been found that only a fibrous structure, unequal to that of natural cheese, is formed in the nozzle described in that the length of this nozzle head is many times greater than the diameter.

In addition, it has appeared to the present inventors that, despite the fact that also aroma agents and flavorings can be added, the method described in EP-A-0 727 138 does not yield a product with the texture and taste of natural cheese, in that only unripened curd and unripened UF retentate serve as base material. As mentioned, the extruder as described in EP-A- 0 727 138 comprises only heating sections, so that the product under all circumstances undergoes a substantial heat load which moreover is only moderately controllable in that only screw elements are used and in that only the product temperature on the wall is measured. This heat load has an adverse effect on both taste and texture of the eventual product, and leads to phase separation of the fatty phase and the phase with hydrophilic constituents.

By virtue of the measures of the present invention, these disadvantages do not occur.

The invention will presently be discussed in more detail, with reference to the Figures in which:
Fig. 1 shows a schematic side view of a co-rotating twin screw extruder;
Fig. 2 shows an example of a screw layout which can be suitably used in the method according to the invention;
Fig. 3 specifies three elements as used in the screw layout;
Fig. 4 shows examples of alternative mixing elements;
Fig. 5 outlines a possibility of temperature measurement in the extruder; and
Fig. 6 shows an outline of a co-extrusion head.

Although reference is made to an extrusion apparatus, the invention is not limited to this embodiment. As mentioned above, the essential method steps can also be carried out, for instance, batchwise or semicontinuously, for instance utilizing mixing vessels and/or extruders, which apparatuses are mutually positioned in series.

The method according to the invention which is preferably carried out in a continuous manner in an extrusion apparatus, and in a preferred embodiment in a co-rotating twin screw extruder, requires in any case cheese as raw material for the shaped cheese to be prepared or the shaped cheese product to be prepared. To the cheese, a proportion of curd and/or other products of dairy origin can be added. Through the intensive kneading treatments during the pasteurization step and the redispersing and texturing processes during the cooling step, it is possible to homogeneously incorporate various aroma agents and flavorings and other additives into the cheese phase.

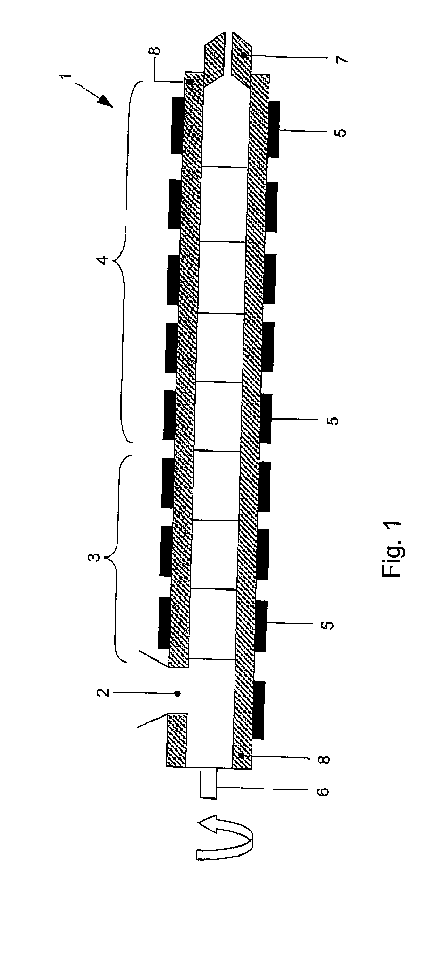

When an extrusion apparatus as outlined in Fig. 1 is used, the raw materials can be added by means of a suitable metering device in the feed opening 2 of the extrusion apparatus 1. Via the feed opening 2, the raw materials are introduced by the rotating screws 6, driven via a driving unit (not shown), into a pasteurization zone 3 and, after passing that zone 3, into a cooling zone 4. Both the pasteurization zone 3 and the cooling zone 4 are provided, at the wall 8, with heating or cooling elements 5. The product leaves the extruder via an extrusion head 7. Heat-sensitive additives can optionally be added in the cooling section 4 of the extruder 1, which, however, requires steps to be taken to prevent a contamination of the cheese or the cheese product with germs causing spoilage. The cheese and other raw materials to be pasteurized can be added with known process equipment such as pumps, vibrating belts, so-called forced feeders, single and twin screw feeders. What equipment is most suitable can be decided by the skilled person and depends on the state of matter and the properties of the starting material to be pasteurized.

The cheese that is added is first cut up into, preferably square, dice or cubes having a diameter, or rib length, which is such that they do not get stuck in the feeding device or otherwise block the supply. When, for instance, a screw is used at the feed opening of the extruder, it is preferred to supply dice or cubes having a diameter or rib length which is at least 1.5 times smaller than the pitch of the screw.

Owing to the elasticity and stickiness of the cheese cubes, conventional single and twin screw feeders for extruders will entail an irregular output as a result of arching. To prevent this, use is made, for instance, of the following preferred feeder. Cheese cubes are added by means of a single-screw metering device. The hopper of this device is trough-shaped, with the angles between the two upstanding sides being preferably not greater than 60°. The cheese is metered with a spiral-shaped screw placed at the bottom in the trough. Above the screw is a rotary shaft with eccentrically arranged pins to prevent arching. The width of the trough is determined at the underside by the screw diameter and is preferably equal to at least 15 times the diameter of the cheese cubes.

Also, for such purpose, a so-called forced feeder can be used; a feeder comprising a funnel in which a screw is placed vertically. This screw continues into the narrowest funnel portion and is driven by a motor which is placed above the screw. The wall of the funnel is preferably scraped. Alternatively, a gravimetric weight belt feeder can be suitably employed.

Following the feeding zone of the extruder 1, a pasteurization zone 3 is laid out. In area 3 heating proceeds via a heated extruder wall, which for that purpose comprises heating elements 5 or is in thermoconductive communication therewith. Optionally, heating can also be done by means of microwave heating or induction heating. In this part of the extrusion apparatus, the mass to be heated should be uniformly adjusted to a pasteurization temperature. To that end, a good radial mixing is to be ensured.

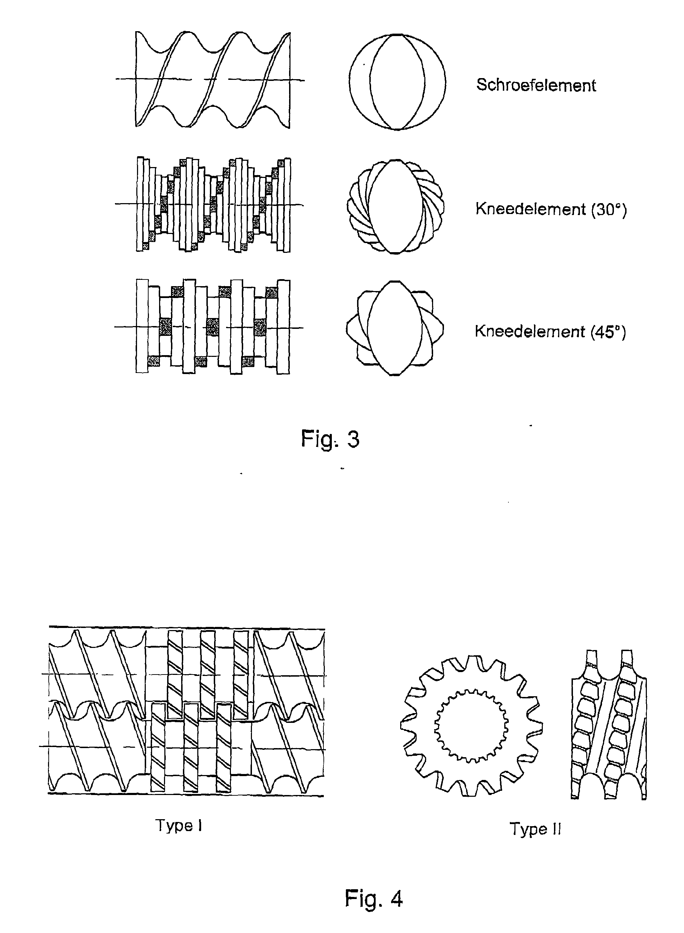

The product to be pasteurized is intensively mixed in the pasteurization zone by the use of elements having a better radial mixing action than screw elements. To be mentioned by way of example are kneading elements rotated relative to each other or so-called turbulent mixing elements. See Figs. 3 and 4. At a greater rotation angle, the so-called stagger angle, between the successive kneading discs, as viewed in axial downstream direction, a better distributive mixing takes place. As a result of this, a better radial temperature equalization takes place. At a greater width of each kneading disc in a kneading block, a better dispersive kneading action takes place. As a result of this, the differences present are reduced and the fat globule surface is enlarged. Also, reverse elements can be used for this mixing action. Also eligible for use are screw elements placed one behind the other, which are mutually rotated through an angle of, for instance, 90°. By the use of such elements, the material is subject to a uniform temperature treatment, so that a minimal heat load can be employed, which prevents, at least reduces, degradation of the material or otherwise harmful temperature influences.

Care is to be taken to fill the pasteurization zone, and to keep it filled, as completely as possible in order to obtain and maintain sufficient residence time in this section and in order to obtain optimum mixing. To that end, for instance neutral kneading blocks can be used or reverse elements can be placed in or at the end of the heating section.

Besides heating via the wall, optionally, steam can be supplied into the heating section to effect a still more efficient heating. The steam can be suitably supplied via a pipe terminating in the extruder wall. It is important here that the flow rate of the steam can be properly controlled. In order to obtain a desired product, a continuous steam flow is necessary. Owing to the presence of the elements responsible for the radial mixing, the steam is properly distributed through the product, thereby preventing local hot spots and associated product degradation.

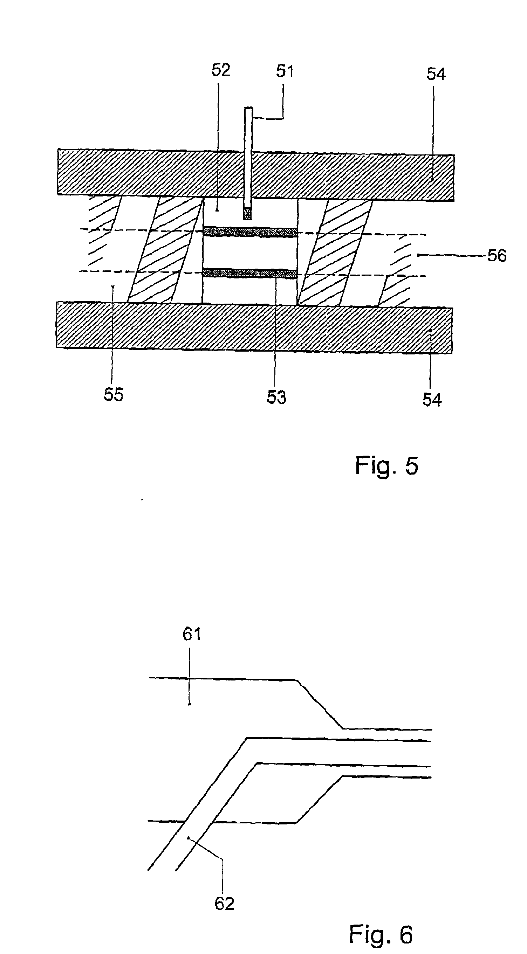

Optionally, but rather preferably so (shown in Fig. 5), at the end of or after the pasteurization zone, there is placed a temperature meter 51 for instance a thermometer or thermocouples through the extruder wall in the bulk of the product 52 to enable the correct product temperature to be measured. This temperature measurement can be used to control and optimize the pasteurization conditions. Evidently, at the location of the temperature measurement, no screw shaft 56 or kneading elements 55 are to be placed, but one or more spacers 53. After these spacers 53, preferably a reverse element or other element is to be placed to keep the section where the temperature is determined completely filled.

The following essential zone of the extrusion apparatus is a cooling zone, in which moreover the texture of the cheese is controlled and in which possibly egressed fat is redispersed. To that end, in this zone, cooling of the product on the extruder wall takes place, while through the presence of a shearing field and mixing action, components having possibly become unmixed are remixed again and the product is textured. Moreover, through an efficient positioning of screw elements, an optimum degree of filling and radial mixing are obtained, thus promoting a homogeneous and sufficiently fast cooling of the product. The cooling step is necessary to be able to give the material a uniform structure and texture.

More in detail, the cooling of the product proceeds through a cooled extruder wall, which can be cooled to, for instance, 2°C. To obtain a heat transfer as efficient as possible from material to wall, the material should be radially distributed as uniformly as possible. This prevents a temperature gradient in the material. Further, the degree of filling in the extruder should be as high as possible, because this results in a large heat transferring surface. To meet both requirements, depending on the desired texture, kneading elements can be arranged or screw elements rotated relative to each other at an angle of for instance 90° can be arranged.

Kneading elements have the effect on the texture of reducing the fat drops, which gives a smoother texture and a higher firmness. It is supposed that these aspects are caused by an increase of the apparent protein content resulting from coverage of the fat globule surface with protein. In addition, the firmness also increases as a result of a different orientation of the protein chains (less fibrous).

Screw elements have the effect on the texture of imparting a mild deformation to the material, thereby leaving intact in particular the texture already formed. If screw elements alone are used (that is, no kneading elements after the pasteurization zone), this may possibly give rise to a coarse and limp texture with fat separation.

The last-mentioned screw elements, owing to their relative rotation, constitute a barrier which increases the degree of filling at a mild shearing regime.

In the cooling section, also texturing of the material takes place. The texturing is controllable by setting a particular cooling scheme, setting a particular speed or the use of a particular type of elements in the extruder (as already mentioned above). Through the combination of cooling and shearing in the cooling zone, any fat having separated in the pasteurization zone is dispersed in the solidifying mass.

Preferably, care is to be taken that the extruder walls in the pasteurization zone and the cooling zone are separated from each other by a heat insulating section.

The last essential apparatus element is a nozzle with which the cheese or the cheese product can be shaped. This nozzle can be so designed that also a filling or a second constituent can be provided on or in the cheese phase through co-extrusion. See Fig. 6, where nozzle 61 is fed by the extruder and pipe 62 supplies a second constituent.

Via the embodiment shown in Fig. 6, it is possible to introduce into the cheese, for instance, an oil-based filling such as mustard, pesto, mayonnaise, or a water-based filling such as fruit paste, fruit concentrate, membrillo, tomato paste, tomato puree; or doughlike pastes, cookies, crunchy particles in a viscous matrix, viscous pastes or purées with various herbs, aromas, colorings, particles, bits of vegetable, bits of fish, bits of meat.

In the nozzle or extrusion head, the shape is given to the material. The shape of the extrusion head determines the shape of the desired product. Also, a co-extrusion head can be used. In this way, filled products with a cheese layer on the outside and a filling on the inside can be made. The filling can consist of various food compositions such as, for instance, mustard, fruit paste, tomato paste. Upon emerging from the extruder, the product can be cut directly; another possibility is, for instance, to form cushions by means of a plant suitable therefor.

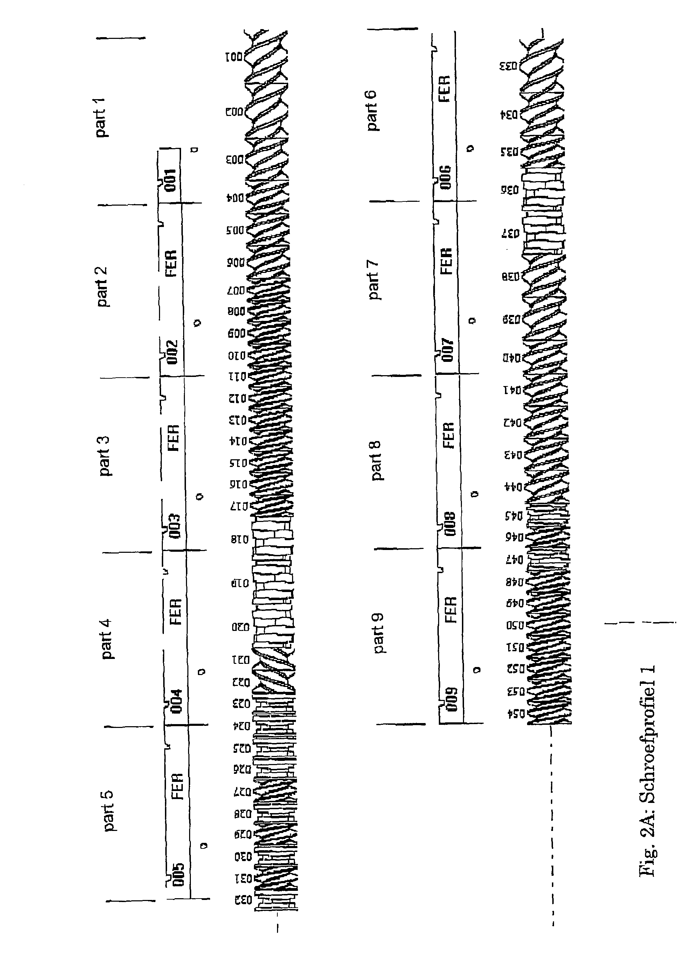

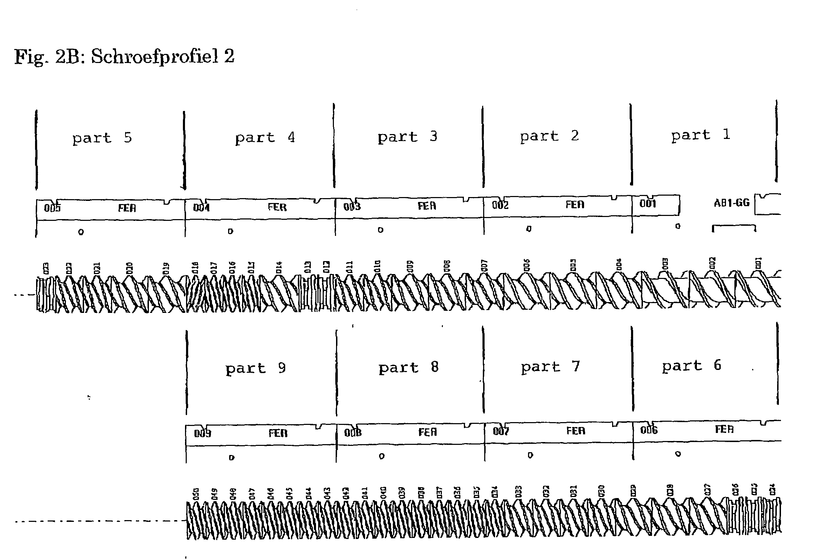

For the extruder shown in Fig. 1, Fig. 2 shows an example of a screw layout. Feed opening 2 of Fig. 1 terminates in part 1 of Fig. 2. Part 1 will as a rule not be heated and therefore have a temperature between 10 and 35, preferably between 15 and 30°C. The screw elements should substantially advance the supplied product to part 2, whereby a slight kneading action is already being realized.

For a further description of the respective screw elements, reference is made to Table 2.

The parts 2-4 of Fig. 2 form the pasteurization zone 3 of Fig. 1. Parts 2, 3 and 4 preferably have a wall temperature of 35-45°C, 50-70°C and 70-110°C, respectively, with preferred temperatures of approximately 40°C, approximately 60°C and approximately 90°C, respectively.

The flow rate in proportion to the extruder geometry and the speed (rpm) must be such that the residence time in the pasteurization zone 3 is sufficient to effect a desired killing off of germs.

The screw layout in parts 2 and 3 is such that an increasingly intensive mixing or kneading occurs, and merges into kneading blocks and possibly a reverse element in part 4 to maintain a sufficient degree of filling in the extruder.

The parts 5-9 of Fig. 2 constitute the cooling zone 4 of Fig. 1. The residence time in the cooling zone must be such that a sufficient extent of cooling is obtained, while the kneading blocks, screw elements and reverse elements are chosen such that in addition to a good texturizing kneading treatment, also a sufficiently high degree of filling is maintained. The wall temperature in part 5 is preferably between 70 and 45°C, most preferably at approximately 60°C; in part 6 between 50 and 30°C, most preferably at approximately 40°C; in part 7 between 40 and 20°C, most preferably at approximately 25°C; in parts 8 and 9 between 30 and 1°C, most preferably at approximately 20°C and approximately 10°C, respectively.

If a less intensive kneading action is desired, it is also possible, for instance, to use a screw layout 2. In this screw layout, the pasteurization zone is in zones 2 to 4 and the cooling zone in zones 5 to 9. In zones 2 and 3, the cheese is heated, in zone 4 the cheese undergoes a mild kneading and heating. Zone 6 serves for redispersing the fat. Compared with a screw layout as specified as screw layout 1 in Table 3 below, screw layout 2 gives a less crumbly and softer cheese.

Table 1 gives an example of preferred extruder wall temperatures prevailing in the respective zones.

**Table 1**

| Zone | 1 | 2 | 3 | 4 | 5 | 6 | 7 | 8 | 9 |
|---|---|---|---|---|---|---|---|---|---|
| Temperature (°C) | 20 | 50 | 60 | 85 | 40 | 30 | 25 | 20 | 10 |

Presently, the invention will be further described in and by the following non-limiting examples.

### Example 1

Introduced into a co-rotating twin-screw extrusion apparatus according to Fig. 1, with the screw layout as shown in Fig. 2, were cubes of Gouda cheese (48+, 4 weeks' ripening, moisture content 42%, content of fat in dry matter of 51.1%, content of salt in dry matter of 3.9%, calcium content of 0.69%, pH=5.28), having ribs of approximately 5 mm. The extruder had a diameter of 32 mm and a length-to-diameter ratio of 36. The temperature of the wall in the feed zone (zone 1) was 20°C; the wall temperatures in the pasteurization zone, zones 2-4, were 40, 60 and 90°C, respectively; the wall temperatures in the cooling zone, zones 5-9, were 60, 40, 25, 20 and 10°C, respectively. The extrusion head had a diameter of 12 mm.

The speed of the two screw shafts was 200 rpm. The mass flow of the cheese was 20 kg/hour.

The product emerging from the extrusion head was in the form of a string having a fine texture, the string being smooth on the outside and not granular or fibrous inside. There was no fat separation visible. The cheese string was slightly elastic. The breaking behavior of the cheese string in the mouth (after 1 day in the refrigerator) corresponded to that of a traditionally prepared Gouda cheese.

### Example 2

Example 1 was repeated, using a different screw layout, as shown in Fig. 2 (screw layout 2). A qualitatively good cheese product was obtained.

### Comparative Example 1

Using a screw layout as described in Fig. 1 of EP-A-0 727 138, a Gouda cheese curd having a fat content of 45%, a dry matter content of 55% and a pH of 5.6 was treated as described in the patent application mentioned. The nozzle, a 5-meter long pipe where each of the five 1-meter sections can be cooled with ice water, formed the only cooling section. Depending on the cooling conditions, it was found that either it was impossible to press a product from the nozzle because of clogging in the extruder or fat separation occurred and a fibrous product remained.

### Example 3

Example 1 was repeated, but now a mixture of 60 wt.% of cheese in cubes having ribs of 5 mm and 40 wt.% of finely ground curd was supplied. More in detail, the curd had a pH of 5.3, a mass percentage of fat in dry matter of 48 and a weight percentage of moisture of 43%. The mass flow of cheese was 12 kg/hour; that of the curd 8 kg/hour.

Again, from the extrusion head, a product was obtained in the form of a string, which product was hardly distinguishable from the product in Example 1.

**Table 2.**

| A further description of the elements in Fig. 2 and Table 3. | | | | | |
|---|---|---|---|---|---|
| Element number | Code of element | Pitch (cm) | Length (cm) | Stagger angle (°) | Number of kneading discs per element |
| 1 | BL0.5 0.5D | - | 1.6 | 45 | 6 |
| 2 | BL0.5 1.D | - | 3.2 | 45 | 6 |
| 3 | BL22-90° 0.5D | - | 1.6 | 90 | 6 |
| 4 | C2F 0.5D' 0.5D | 1.6 | 1.6 | - | - |
| 5 | C2F 0.75D'0.75D | 2.4 | 2.4 | - | - |
| 6 | CF2C 1D ' 0.5D | -3.2 | 1.6 | - | - |
| 7 | C2F 1D ' 1D | 3.2 | 3.2 | - | - |
| 8 | C2F 1.25D ' 1.25D | 4.0 | 4.0 | - | - |
| 9 | CF2C- S3 0.5D' 0.5D | -1.6 | 1.6 | - | - |
| 10 | T2F 1.25D' 1.25D | 4.0 | 4.0 | - | - |

**Table 3.**

| The order of the elements for screw layouts 1 and 2 | | | | |
|---|---|---|---|---|
| **Screw layout 1** | | | **Screw layout 2** | |
| Position | Element number | | Position | Element number |
| 1 | 8 | | 1 | 10 |
| 2 | 8 | | 2 | 10 |
| 3 | 7 | | 3 | 10 |
| 4 | 5 | | 4 | 8 |
| 5 | 5 | | 5 | 8 |
| 6 | 5 | | 6 | 8 |
| 7 | 4 | | 7 | 7 |
| 8 | 4 | | 8 | 7 |
| 9 | 4 | | 9 | 7 |
| 10 | 4 | | 10 | 5 |
| 11 | 4 | | 11 | 5 |
| 12 | 4 | | 12 | 3 |
| 13 | 4 | | 13 | 3 |
| 14 | 4 | | 14 | 7 |
| 15 | 4 | | 15 | 4 |
| 16 | 4 | | 16 | 4 |
| 17 | 4 | | 17 | 4 |
| 18 | 2 | | 18 | 9 |
| 19 | 2 | | 19 | 7 |
| 20 | 2 | | 20 | 7 |
| 21 | 6 | | 21 | 5 |
| 22 | 6 | | 22 | 5 |
| 23 | 3 | | 23 | 1 |
| 24 | 3 | | 24 | 1 |
| 25 | 3 | | 25 | 3 |
| 26 | 3 | | 26 | 3 |
| 27 | 4 | | 27 | 7 |
| 28 | 3 | | 28 | 7 |
| 29 | 4 | | 29 | 7 |
| 30 | 3 | | 30 | 5 |
| 31 | 4 | | 31 | 5 |
| 32 | 3 | | 32 | 5 |
| 33 | 8 | | 33 | 5 |
| 34 | 7 | | 34 | 4 |
| 35 | 5 | | 35 | 4 |
| 36 | 2 | | 36 | 4 |
| 37 | 2 | | 37 | 4 |
| 38 | 7 | | 38 | 4 |
| 39 | 7 | | 39 | 4 |
| 40 | 5 | | 40 | 4 |
| 41 | 5 | | 41 | 4 |
| 42 | 5 | | 42 | 4 |
| 43 | 5 | | 43 | 4 |
| 44 | 5 | | 44 | 4 |
| 45 | 1 | | 45 | 4 |
| 46 | 4 | | 46 | 4 |
| 47 | 1 | | 47 | 4 |
| 48 | 4 | | 48 | 4 |
| 49 | 4 | | 49 | 4 |
| 50 | 4 | | 50 | 4 |
| 51 | 4 | | | |
| 52 | 4 | | | |
| 53 | 4 | | | |
| 54 | 4 | | | |

## Claims

1. A method for preparing a shaped cheese or a shaped cheese product, wherein cheese, optionally in combination with curd and/or other products of dairy origin, as well as with other, non protein containing dairy additions and non dairy based additive products, is subjected to a heating or pasteurization step under mixing conditions, whereafter the product thereby formed is subjected to a cooling step, in which cooling step any fat having separated during the heating or pasteurization step is redispersed and the product is textured, which textured product is subsequently subjected to a shaping step via a nozzle.

2. A method according to claim 1, wherein the method is carried out continuously in an extrusion apparatus comprising a pasteurization zone for an intensive kneading under heating or pasteurization conditions and a cooling zone for the cooling step.

3. A method according to any one of the preceding claims, wherein the pasteurization step is carried out so as to result in a product with a homogeneous temperature.

4. A method according to any one of the preceding claims, wherein in the cooling step the wall is cooled to a temperature between 0 and 30°C and/or the cheese is cooled to a temperature between 10 and 35°C.

5. A shaped cheese or shaped cheese product obtainable according to the method according to any one of the preceding claims.

6. A shaped cheese product according to claim 5, in which a filling is included.

7. An extrusion apparatus arranged to be used for the method according to any one of claims 1-4, comprising co-rotatable twin screws, which extrusion apparatus has a supply for at least cheese optionally in combination with curd and/or other products of dairy origin; which supply communicates with a pasteurization zone, comprising heating elements located in or on the extruder wall and elements on the twin screw arranged to give a radial mixing; downstream of the pasteurization zone at least one cooling zone, comprising cooling elements located in or on the extruder wall; and a nozzle for shaping the cheese or the cheese product.

8. An extrusion apparatus according to claim 7, wherein the pasteurization zone is furthermore provided with an inlet for steam.
